Europäisches Patentamt

European Patent Office

Office européen des brevets

(19)

(11) **EP 0 741 282 A2**

(12) # DEMANDE DE BREVET EUROPEEN

(43) Date de publication:
06.11.1996 Bulletin 1996/45

(51) Int. Cl.$^6$: **G01D 5/38**

(21) Numéro de dépôt: 96106843.4

(22) Date de dépôt: 30.04.1996

(84) Etats contractants désignés:
DE FR

(30) Priorité: 04.05.1995 CH 1282/95

(71) Demandeur: CSEM
Centre Suisse d'Electronique et de
Microtechnique S.A.
CH-2007 Neuchâtel (CH)

(72) Inventeurs:
• Olivier, Parriaux
1005 Lausanne (CH)

• Michel, Neviere
13013 Marseille (FR)
• Evgueni, Popov
13012 Marseille (FR)

(74) Mandataire: Patry, Didier Marcel Pierre et al
I C B,
Ingénieurs Conseils en Brevets S.A.
Rue des Sors 7
2074 Marin (CH)

(54) **Dispositif optique de mesure d'un déplacement relatif entre deux éléments**

(57)      Dispositif optique de mesure d'un déplacement entre un premier élément (2) et un deuxième élément (6) associés respectivement à un premier réseau (4) de période spatiale $\Lambda$ et un deuxième réseau (8) de période spatiale (P) = $\Lambda/2$ . Ce dispositif optique comprend une source (10,14) fournissant un faisceau (22) de lumière parallèle arrivant avec une incidence normale sur le premier réseau (4) qui diffracte la lumière essentiellement selon les ordres de diffraction -1 et +1. La distance séparant les premier et deuxième réseaux (4,8) est inférieure à la distance de séparation des deux faisceaux (30,32) diffractés par le premier réseau (4) respectivement selon les ordres -1 et +1. Le deuxième réseau (8) permet de coupler les deux faisceaux diffractés susmentionnés (30,32) de manière à ce qu'ils interfèrent partiellement, l'intensité de cette interférence étant mesurée par des capteurs (16,18).

Fig.1

EP 0 741 282 A2

## Description

La présente invention concerne un dispositif de mesure d'un déplacement relatif entre deux éléments dont l'un au moins est mobile relativement à l'autre.

Il est connu de tels dispositifs optiques de mesure comprenant au moins un réseau de diffraction servant à diffracter un faisceau incident, provenant d'une source de lumière sensiblement monochromatique, et à former ainsi des faisceaux diffractés dont au moins deux sont sélectionnés pour interférer ensemble. Pour ce faire, le dispositif optique est agencé de manière que ces deux faisceaux diffractés initialement dans des directions différentes sont ensuite au moins partiellement recombinés pour permettre une interférence entre eux, l'intensité de cette interférence étant mesurée par au moins un capteur. Pour permettre une mesure interférométrique du déplacement d'un des deux éléments relativement à l'autre, la source de lumière et le capteur sont solidaires d'un de ces deux éléments et le réseau de diffraction de l'autre de ces deux éléments.

Il est connu du document DE 24 32 551 un dispositif de mesure interférométrique utilisant trois réseaux de diffraction en transmission pour engendrer deux faisceaux diffractés d'ordre +1 et -1 et les coupler entre eux pour permettre une interférence dont la mesure permet de déduire à l'aide d'un algorithme de calcul la valeur du déplacement relatif entre deux de ces trois réseaux. Le dispositif décrit dans ce document DE 24 31 551 nécessite trois réseaux de diffraction et un ajustement précis de la distance entre ces trois réseaux. De plus, une partie relativement grande de l'intensité du faisceau initial est inévitablement perdue au passage de chaque réseau et particulièrement au passage du réseau intermédiaire (voir figures 1 à 3 de ce document). On notera que dans ce document, seuls les faisceaux utiles ont été représentés. Cependant, sans indication particulière sur les trois réseaux de diffraction, plusieurs réseaux diffractés sont inopérants, ce qui diminue l'efficacité du dispositif. De plus, au moins une partie des faisceaux diffractés non-utiles à la mesure sont reçus par les capteurs, ce qui diminue le contraste des franges d'interférence reçues par ces capteurs.

Le but de la présente invention est de fournir un dispositif optique de mesure interférométrique d'un déplacement relatif entre deux objets ou éléments qui soit efficace, de réalisation peu onéreuse et permettant un agencement compact.

Pour atteindre ce but, l'invention a pour objet un dispositif optique de mesure d'un déplacement relatif entre un premier élément et un deuxième élément comprenant :

- une source de lumière sensiblement monochromatique, de longueur d'onde $\lambda$, agencée pour fournir un premier faisceau de lumière sensiblement parallèle se propageant en direction dudit premier élément, lesdits premier et deuxième éléments étant transparents pour ladite longueur d'onde $\lambda$,

- un premier réseau de diffraction et un deuxième réseau de diffraction associés respectivement auxdits premier et deuxième éléments, ces premier et deuxième réseaux étant disposés parallèlement l'un à l'autre et orientés de manière que le premier faisceau fourni par la source arrive sur le premier réseau avec une incidence sensiblement normale, ce premier réseau ayant une première période spatiale $\Lambda$ supérieure à ladite longueur d'onde $\lambda$ et servant à diffracter ledit faisceau de lumière incident selon le premier ordre de diffraction de manière à former un deuxième faisceau diffracté d'ordre +l et un troisième faisceau diffracté d'ordre -1,

- au moins un premier capteur permettant de mesurer une intensité lumineuse incidente.

Ce dispositif optique est caractérisé en ce que la distance séparant le premier réseau du deuxième réseau est inférieur à la distance de séparation spatiale des deuxième et troisième faisceaux, et en ce que le deuxième réseau a une deuxième période spatiale dont la valeur est sensiblement égale à la moitié de la valeur de la première période spatiale. Le deuxième réseau est agencé pour diffracter en transmission le deuxième faisceau de manière à former un quatrième faisceau diffracté d'ordre -1 et un cinquième faisceau d'ordre 0, ce deuxième réseau étant également agencé pour diffracter en transmission le troisième faisceau de manière à former un sixième faisceau diffracté d'ordre +1 et un septième faisceau d'ordre 0. Le premier capteur est disposé de manière à capter au moins partiellement l'intensité des parties respectives des quatrième et septième faisceaux superposées l'une à l'autre et interférant l'une avec l'autre.

Il résulte des caractéristiques de l'invention susmentionnées que seuls deux réseaux de diffraction et un capteur sont nécessaires et suffisants pour mesurer un déplacement en valeur absolue entre deux éléments. Ensuite, la distance entre les deux réseaux étant faible et l'efficacité du dispositif de mesure optique étant par construction d'autant meilleure que cette distance est faible, une augmentation de l'efficacité et une diminution du volume nécessaire pour le dispositif selon l'invention sont conjointement réalisés, ce qui est particulièrement avantageux.

Selon une caractéristique particulière de l'invention, la première période spatiale $\Lambda$ a une valeur inférieure à trois fois la valeur de la longueur d'onde $\lambda$.

Il résulte de cette caractéristique particulière que le premier réseau ne fournit aucun faisceau diffracté d'ordre supérieur à 2. De ce fait, le nombre de faisceaux diffractés est limité et le contraste des franges d'interférence, tout comme l'efficacité du dispositif sont meilleurs. Par efficacité du dispositif, on comprend la puissance lumineuse moyenne reçue par un capteur divisé par la puissance lumineuse moyenne du faisceau initial fourni par la source.

Diverses caractéristiques des premier et deuxième réseaux seront décrites ultérieurement à l'aide des figures. Ces caractéristiques garantissent une grande efficacité du dispositif et un excellent contraste des franges d'interférence reçues par le ou les capteur(s) prévu(s).

Selon une autre caractéristique particulière de l'invention, la distance séparant le premier réseau du premier capteur est supérieur à la distance de séparation spatiale des deuxième et troisième faisceaux. Il découle de cette caractéristique particulière une séparation totale entre les deux faisceaux interférant selon la direction de diffraction d'ordre -1 du premier réseau et les deux faisceaux interférant selon la direction de diffraction d'ordre +1 de ce premier réseau. De ce fait, on assure un contraste optimal pour la mesure par le capteur d'un nombre de franges d'interférence correspondant à un déplacement mesuré.

D'autres caractéristiques et avantages de l'invention seront également décrits ci-après à l'aide de la description suivante faite en référence aux dessins annexés, donnés à titre nullement limitatif, sur lesquels:

- la figure 1 présente schématiquement en coupe un dispositif optique de mesure selon l'invention;
- la figure 2 est une deuxième représentation schématique du dispositif optique de mesure représenté à la figure 1;
- la figure 3 représente schématiquement un premier réseau de diffraction du dispositif représenté à la figure 1;
- la figure 4 représente schématiquement une plage de valeurs optimales pour deux paramètres du premier réseau représenté à la figure 3;
- la figure 5 représente schématiquement un deuxième réseau de diffraction du dispositif représenté à la figure 1;
- la figure 6 représente schématiquement une plage de valeurs optimales pour deux paramètres du deuxième réseau représenté à la figure 5;
- la figure 7 est une vue de dessus de l'élément du dispositif représenté à la figure 1 auquel est associé le deuxième réseau représenté à la figure 5.

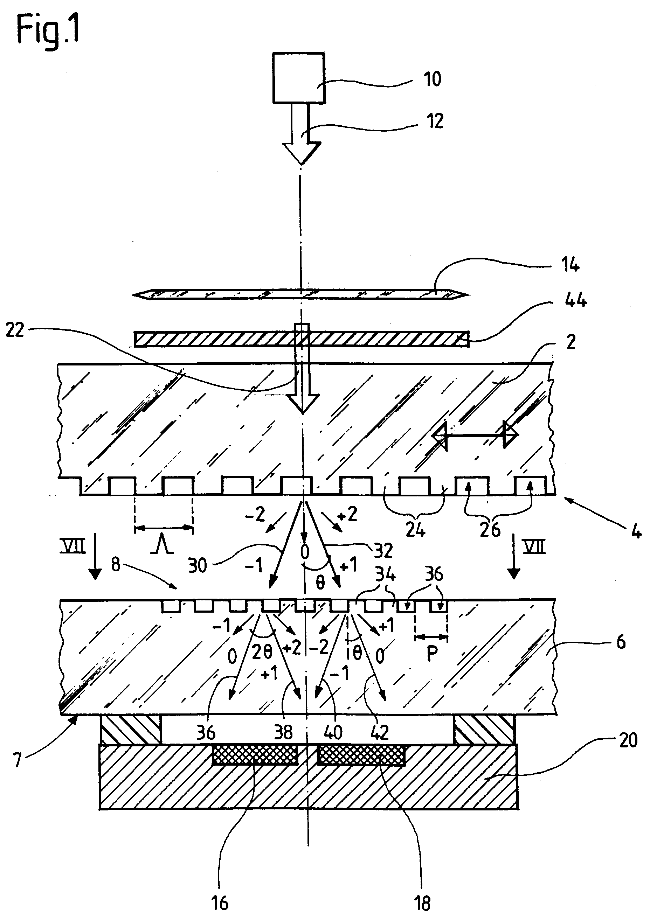

A l'aide des figures 1 à 7 on décrira ci-après un mode de réalisation d'un dispositif optique de mesure selon l'invention.

Ce dispositif comprend un premier élément mobile 2 auquel est associé un premier réseau de diffraction 4. Ce dispositif comprend en outre un deuxième élément 6 associé à un deuxième réseau de diffraction 8. Ensuite, il comprend une source de lumière 10 agencée pour fournir une lumière sensiblement monochromatique. A titre d'exemple, la source 10 est formée par une diode électroluminescente (LED) ou un micro-laser. Le faisceau de lumière initiale 12 fourni par la source 10 est collimaté par un dispositif de collimation 14 représenté schématiquement sur la figure 1 par une lentille convergente. Cependant, ce dispositif de collimation peut comprendre plusieurs éléments optiques. Le dispositif optique de mesure comporte encore des capteurs 16 et 18 permettant de mesurer une intensité lumineuse incidente et sa variation dans le temps. Ces capteurs 16 et 18 sont associés à un substrat 20 solidaire de l'élément 6. On notera que la source 10 et les capteurs 16 et 18 sont positionnés fixement l'un par rapport à l'autre lorsqu'une mesure d'un déplacement de l'élément 2 relativement à l'élément 6 est effectuée.

La source de lumière 10 et le dispositif de collimation 14 forment ensemble une source de lumière fournissant un faisceau 22 de lumière sensiblement parallèle se propageant en direction du premier élément 2. Le faisceau de lumière 22 a une longueur d'onde $\lambda$ et les deux éléments 2 et 6 sont transparents pour cette longueur d'onde $\lambda$.

Le faisceau 22 arrive avec une incidence normale sur le premier réseau 4. Ce réseau 4 est agencé de manière que le faisceau 22 incident est diffracté essentiellement selon les ordres de diffraction +1 et -1. On notera déjà ici que les faisceaux diffractés d'ordre 0, +2 et -2 sont également fournis par le réseau 4, mais avec une faible intensité relativement aux faisceaux diffractés d'ordre -1 et +1.

Le profil du réseau 4 est formé de merlons 24 et d'embrasures 26. En outre, le réseau 4 a une période spatiale $\Lambda$. Les faisceaux, diffractés par ce réseau 4, d'ordre -1 et +1 sont respectivement désignés par les références 30 et 32. Les merlons 24 ont une hauteur H et une largeur W à mi-hauteur.

Le réseau 8 est agencé de telle manière que les faisceaux 30 et 32 arrivent au moins partiellement sur celui-ci. Le profil de ce réseau 8 est formé également de merlons 34 et d'embrasures 36. Les merlons 34 ont une hauteur Y et une largeur X à mi-hauteur.

Selon l'invention, la période spatiale P du deuxième réseau 8 est sensiblement égale à $\Lambda/2$. Grâce à cette caractéristique, une partie du faisceau 30 est diffractée dans la direction du faisceau 32. De même une partie du faisceau 32 est diffractée par ce deuxième réseau 8 dans la direction du faisceau 30.

Le réseau 8 est agencé de manière que le faisceau 30 soit diffracté essentiellement selon les ordres 0 et +1, alors que le faisceau 32 est diffracté essentiellement selon les ordres 0 et -1. Le deuxième réseau 8 diffracte également le faisceau 30 selon l'ordre -1 et l'ordre +2 et le faisceau 32 selon l'ordre -2 et l'ordre +1. Cependant, le réseau 8 est agencé de manière que l'intensité de ces derniers faisceaux est faible relativement à l'intensité des faisceaux 36 et 38 correspondant respectivement aux ordres de diffraction 0 et +1 du faisceau 30 diffracté par le réseau 8 et des faisceaux 40 et 42 correspondant respectivement aux ordres de diffraction -1 et 0 du faisceau 32 diffracté par ce réseau 8.

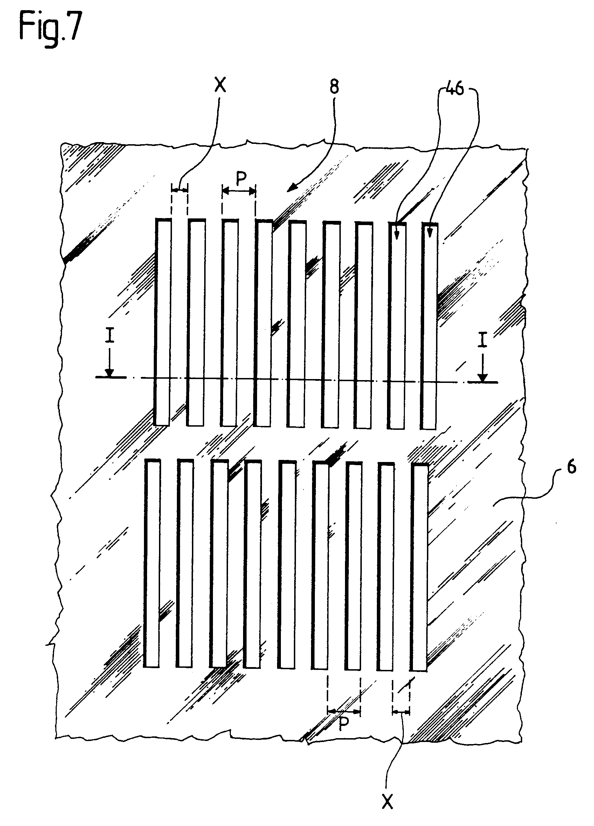

Il est encore prévu des moyens de polarisation 44 servant à polariser la lumière du faisceau 22. On notera que ces moyens de polarisation 44 peuvent être agencés n'importe où entre le dispositif de collimation 14 et les capteurs 16 et 18. Ces moyens de polarisation 44 servent à polariser la lumière parallèle du faisceau 22 de telle manière que le champ électrique soit sensiblement parallèle aux rainures du premier réseau 4 qui sont définies par les embrasures 26 selon la direction perpendiculaire au plan de coupe de la figure 1. De même, le champ électrique des faisceaux 30 et 32 arrivant sur le deuxième réseau 8 présente alors un champ électrique parallèle aux rainures 46 (figure 7) définies par les embrasures 36 selon la direction perpendiculaire au plan de coupe de la figure 1.

Le principe de fonctionnement du dispositif optique de mesure selon l'invention repose en premier lieu sur le fait que le premier réseau 4 diffracte essentiellement le faisceau incident 22 selon l'ordre de diffraction 1 et que le deuxième réseau 8 diffracte essentiellement chacun des deux faisceaux 30 et 32 selon la direction respective de ces deux faisceaux et également selon la direction de l'autre de ces deux faisceaux. De ce fait, les faisceaux 36 et 40 se propagent parallèlement l'un à l'autre selon la direction du faisceau 30 alors que les faisceaux 38 et 42 se propagent parallèlement l'un à l'autre selon la direction du faisceau 32.

Ensuite, de manière à assurer une interférence entre les faisceaux 36 et 40 et entre les faisceaux 38 et 42, il est prévu selon l'invention que la distance E entre le premier réseau 4 et le deuxième réseau 8 est inférieure à la distance de séparation spatiale Mx des faisceaux 30 et 32 se propageant dans le fluide (non représenté) situé entre ces premier et deuxième réseaux 4 et 8.

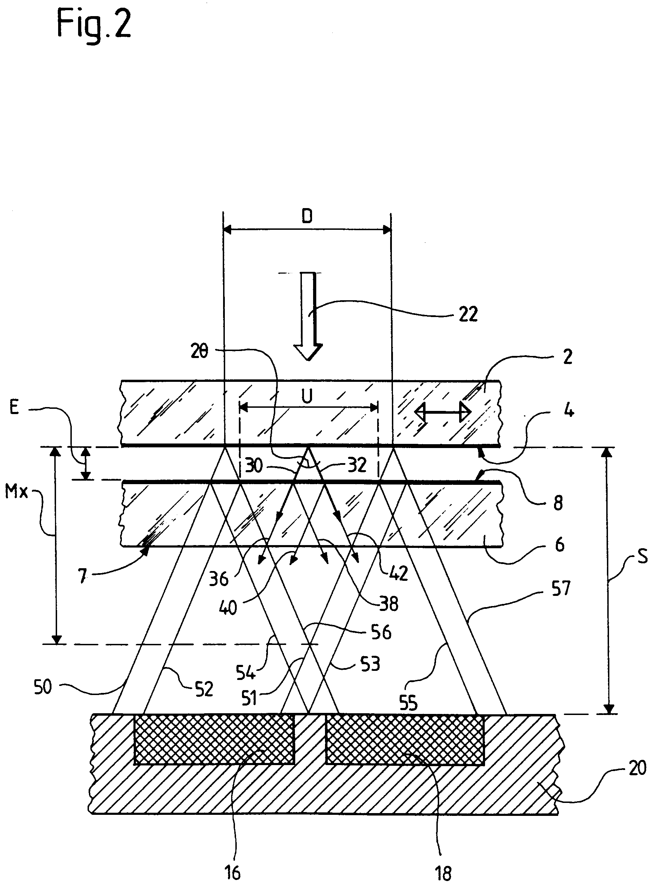

La distance de séparation spatiale Mx est donc une valeur calculée dépendant de l'angle de diffraction $\Theta$ des faisceaux 30 et 32 ainsi que du diamètre D du faisceau incident 22 dans le plan de coupe des figures 1 et 2. La relation mathématique reliant la distance Mx au diamètre D et à l'angle de diffraction $\Theta$ est donnée par :

$$Mx = D/2tg\Theta$$

On notera que l'angle de diffraction $\Theta$ dépend quant à lui de la période spatiale $\Lambda$ du premier réseau 4, de l'indice de réfraction N de la matière formant les merlons 24 du réseau 4 et de la longueur d'onde $\lambda$ de la lumière fournie par la source 10. La relation mathématique reliant ces divers paramètres est donnée par :

$$\Theta = arcsin(\lambda/N\Theta)$$

La distance E étant inférieure à la distance Mx, les faisceaux 36 et 40, respectivement 38 et 42 interfèrent partiellement entre eux comme cela est représenté à la figure 2. Sur cette figure 2 ont été représentées les directions de propagation des faisceaux utiles à la mesure interférométrique et les largeurs de ces faisceaux ont également été représentées à l'aide de lignes définissant sensiblement l'espace occupé par chacun des faisceaux 36, 38, 40 et 42 dans le plan de coupe de la figure 2. Ainsi, le faisceau 36 occupe l'espace situé entre les lignes 50 et 51, le faisceau 40 occupe l'espace situé entre les lignes 52 et 53, le faisceau 38 occupe l'espace situé entre les lignes 54 et 55, et le faisceau 42 occupe l'espace situé entre les lignes 56 et 57.

On remarquera que la diffraction survenant à la surface 7 de l'élément 6 n'a pas été représentée graphiquement pour des raisons de clarté du dessin.

Les parties respectives des faisceaux 36 et 40 situés entre les lignes 51 et 52 interfèrent entre elles. De même, les parties respectives des faisceaux 38 et 42 situées entre les lignes 55 et 56 interfèrent entre elles.

L'intensité de la lumière dans les zones d'interférence susmentionnées dépend du déphasage entre les faisceaux interférant entre eux, ce déphasage dépendant notamment de la position relative de l'élément 2 par rapport à l'élément 6 et de la période spatiale $\Lambda$ du réseau 4.

Lorsque l'élément 2 est déplacé relativement à l'élément 6, le déphasage entre les faisceaux interférant varie et l'intensité lumineuse reçue par les capteurs 16 et 18, disposés de manière à recevoir l'intensité lumineuse des parties respectivement des faisceaux interférant entre eux, varie de manière sinusoïdale. Etant donné la symétrie de la configuration optique du dispositif représenté aux figures 1 et 2 et la conservation de l'énergie, si le capteur 16 reçoit une intensité lumineuse variant selon $sin\phi$, $\phi$ étant le déphasage, le capteur 18 reçoit une intensité lumineuse variant selon $-sin\phi$.

En utilisant la mesure effectuée par les deux capteurs 16 et 18, il est possible à l'aide d'un circuit électronique (non représenté) d'éliminer le bruit de fond provenant de faisceaux secondaires non-utiles à la mesure et d'obtenir un meilleur contraste des franges d'interférence.

De plus, pour pouvoir déterminer le sens du déplacement de l'élément 2 relativement à l'élément 6, il est prévu un troisième réseau 60 (figure 7) situé à la surface de l'élément 6 et présentant un profil sensiblement identique à celui du deuxième réseau. Cependant, ce troisième réseau est décalé selon la direction de la ligne de coupe I-I du quart de la période spatiale P des réseaux 8 et 60. La dimension du faisceau initial 22 selon la direction perpendiculaire au plan de coupe des figures 1 et 2 est prévue suffisamment grande pour que les faisceaux diffractés 30 et 32 arrivent partiellement sur le deuxième réseau 8 et sur le troisième réseau 60. Il résulte de cet agencement que si l'intensité lumineuse reçue par les capteurs 16 et 18 varie selon $\pm sin\phi$, l'intensité reçue par deux autres capteurs (non représentés), agencés à la surface du substrat 20 pour recevoir les parties superposées des faisceaux 36 et 40, respectivement 38 et 42 diffractés par le réseau 60, varient selon $\pm cos\phi$. De ce fait, il est possible de déterminer de manière univoque le sens du déplacement de l'élément 2 relativement à l'élément 6.

Afin d'augmenter au maximum le contraste des franges d'interférence reçues par les capteurs, il est avantageusement prévu que la distance s de séparation entre le réseau 4 et les capteurs 16 et 18 soit supérieure à la distance Mx.

Comme cela a été représenté sur la figure 1, le réseau 4 diffracte a priori selon plusieurs ordres de diffraction. L'invention se propose de limiter au maximum les diffractions parasites, c'est-à-dire non-utiles à la mesure interférométrique effectuée par le dispositif optique selon l'invention. Pour ce faire, l'invention propose une condition sur la période spatiale Λ du réseau 4, à savoir que cette période spatiale Λ a une valeur inférieure à trois fois la valeur de la longueur d'onde λ de la lumière fournie par la source 10. De ce fait, seuls les ordres de diffraction 0, 1 et 2 sont engendrés par le réseau 4. Ensuite, selon l'approche de l'optique scalaire, dite aussi optique classique, il est possible d'éliminer les ordres de diffraction 0 et 2 en configurant le réseau 4 de manière que

$$W = Λ/2$$

$$H = λ/2(N-l)$$

Ainsi, dans le cadre de l'optique classique, seuls les faisceaux utiles d'ordre -1 et +1 sont engendrés par le réseau, ce qui garantit une efficacité optimale du dispositif optique de mesure. On mentionnera que bien évidemment la période spatiale Λ est plus grande que la longueur d'onde λ.

Cependant, diverses expériences et simulations à l'aide d'outils informatiques conçus à cet égard ont montré que la condition Λ<3λ susmentionnée pour des longueurs d'onde de l'ordre de grandeur de 1 μm engendre un comportement optique nécessitant une analyse vectorielle des phénomènes de diffraction survenant aux réseaux 4, 8 et 60. Concernant le réseau 4, diverses mesures et résultats de simulations ont permis d'établir une plage de valeurs pour le couple H/λ, W/λ garantissant que l'intensité lumineuse du faisceau initial 22 est diffractée essentiellement selon les ordres +1 et -1. Pour obtenir une intensité lumineuse dans chacun des ordres ± 1 supérieure à 30 % de l'intensité du faisceau initial et une intensité inférieure à 10 % de cette intensité pour chacun des ordres 0, -2 et +2, il a été déterminé que la valeur de H/λ et la valeur de W/λ sont reliées entre elles de telle manière que le couple formé par ces deux valeurs est compris dans une première plage bidimensionnelle 64 définie par les quatre relations mathématiques suivantes :

$$H/λ = 1,25 (W/Λ) + 0,45;$$

$$H/λ = 1,25 (W/Λ) + 0,05;$$

$$W/Λ = 0,8;$$

$$H/λ = -3,45 (W/Λ) + 2,40.$$

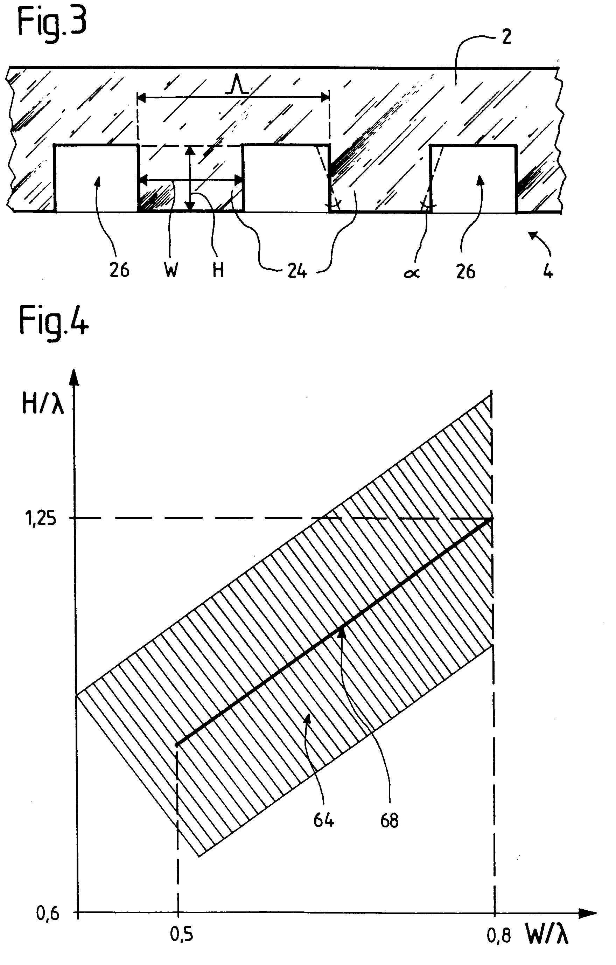

Cette plage bidimensionnelle 64 est représentée schématiquement à la figure 4.

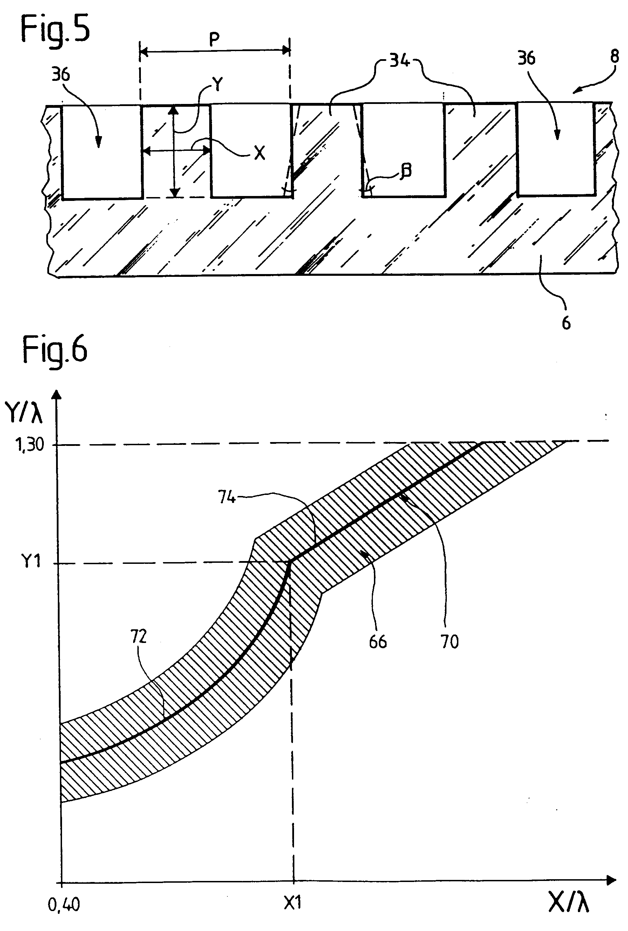

Concernant le réseau 8, ainsi que le réseau 60 dans le cas où ce dernier est prévu, diverses mesures et simulations ont permis d'établir une plage bidimensionnelle 66, représentée schématiquement à la figure 6, pour Y/λ et X/λ dans laquelle les faisceaux 36 et 38, respectivement 40 et 42 ont une intensité sensiblement semblable. Pour que l'intensité totale des faisceaux 36 et 38, respectivement 40 et 42 soit supérieure à 80 % de l'intensité du faisceau 30, respectivement 32 et que la différence d'intensité entre le faisceau 36 et 38, respectivement 40 et 42 soit inférieure à 20 % de l'intensité du faisceau 36, respectivement 42, il a été déterminé que la valeur de Y/λ et la valeur de X/λ sont reliées entre elles de telle manière que le couple formé par ces deux valeurs est compris dans une plage bidimensionnelle 66 définie par les six relations mathématiques suivantes :

$$Y/λ = 8,679 (X/λ)^2 - 6,851 (X/λ) + 2,113;$$

$$Y/λ = 0,974 (X/λ) + 0,514;$$

$$Y/λ = 8,120 (X/λ)^2 - 6,381 (X/λ) + 1,905;$$

$$Y/λ = 1,039 (X/λ) + 0,383;$$

$$X/λ = 0,40;$$

$$Y/λ = 1,30.$$

On remarquera que sur le graphe de la figure 4, la courbe 68 donnant les valeurs optimales pour le couple H/λ et W/Λ est donné par la relation mathématique

$$H/λ = 1,25 (W/Λ) + 0,25$$

pour des valeurs de W/Λ comprises entre 0,5 et 0,8. De même, sur la figure 6 a été représentée la courbe 70 donnant les valeurs optimales pour le couple Y/λ et X/λ. Cette courbe 70 est formée de deux segments reliés entre eux au point (X1, Y1). Sur la base des mesures effectuées, il a été déterminé que la valeur de X1 = 0,593 et la valeur de Y1 = 1,039. Le segment 72 est défini pour des valeurs de X/λ comprises entre 0,40 et X1, alors que le segment 74 est défini pour des valeurs de Y/λ comprises entre Y1 et 1,30.

La relation mathématique définissant le segment 72 est donnée par :

$$Y/λ = 8,399 (X/λ)^2 - 6,616 (X/λ) + 2,009$$

La relation mathématique définissant le segment 74 est donnée par :

$$Y/λ = 1,039 (X/λ) + 0,423.$$

On notera encore qu'il a été constaté lors des diverses mesures que les merlons 24 du réseau 4 peuvent avoir un flanc non-vertical sans nuire de manière sensible à l'efficacité du dispositif optique selon l'invention. Comme représenté à la figure 3, les flancs des merlons 24 peuvent présenter un décalage angulaire α relativement à un flanc vertical optimal. Des mesures ont démontré qu'une variation de l'angle α entre 0 et environ 20° n'influence pas sensiblement l'efficacité du dispositif optique. De même, il a été constaté que les merlons 34 du réseau 8 peuvent également avoir un flanc présentant un décalage angulaire β par rapport à un flanc vertical. A nouveau, une variation de l'angle β entre 0 et 20° n'a pas d'influence sensible sur l'efficacité du dispositif optique. Cette constatation est particulièrement avantageuse pour la réalisation du réseau 4 et plus particulièrement du réseau 8 qui présente une période spatiale inférieure.

La condition $\Lambda<3\lambda$, ou de manière équivalente $P<3\lambda/2$, est non seulement avantageuse pour limiter le nombre de faisceaux diffractés par le réseau 4, mais également pour le nombre de faisceaux diffractés par le réseau 8 et, le cas échéant, le réseau 60. De plus, cette condition assure que les faisceaux parasites (ordre de diffraction -1 et +2, respectivement -2 et +1) représentés sur la figure 1 de part et d'autre des faisceaux 36 et 38, respectivement 40 et 42 sont totalement réfléchis à la surface 7 de l'élément 6 et ne sont ainsi nullement reçus par les capteurs 16 et 18.

On mentionnera encore que les diverses mesures ont été effectuées avec une lumière de longueur d'onde $\lambda$ égale 0,8 μm, un réseau 4 de période spatiale $\Lambda = 2$ μm et un réseau 8 de période spatiale P = 1 μm. Ainsi, les plages bidimensionnelles 64 et 66 représentées respectivement aux figures 4 et 6 sont valables pour tout $\lambda$ de l'ordre de 1 μm et une période spatiale $\Lambda$ sensiblement égale à 2,5 $\lambda$. Cependant, on notera que bien que les plages bidimensionnelles 64 et 66 peuvent varier pour un autre facteur de proportionnalité entre $\Lambda$ et $\lambda$, la forme générale et le comportement optique restent semblables.

Dans une variante de réalisation non-représentée, le dispositif optique de mesure selon l'invention est agencé pour la mesure d'un déplacement angulaire entre deux éléments. Cette variante de construction est semblable au mode de réalisation décrit ci-avant à la différence que le premier réseau 4 a des rainures disposées radialement relativement à l'axe de rotation de l'élément tournant associé à ce réseau. Dans cette variante, les réseaux 8 et 60 sont agencés de préférence de telle manière que les rainures formant ces réseaux soient également disposées radialement relativement à l'axe de rotation de l'élément tournant susmentionné.

**Revendications**

1. Dispositif de mesure d'un déplacement relatif entre un premier élément (4) et un deuxième élément (6) comprenant :

   - une source de lumière (10,14) sensiblement monochromatique, de longueur d'onde $\lambda$, agencée pour fournir un premier faisceau (22) de lumière sensiblement parallèle se propageant en direction dudit premier élément, lesdits premier et deuxième éléments étant transparents pour ladite longueur d'onde $\lambda$,

   - un premier réseau de diffraction (4) et un deuxième réseau de diffraction (8) associés respectivement auxdits premier et deuxième éléments, ces premier et deuxième réseaux de diffraction étant disposés sensiblement parallèlement l'un à l'autre et orientés de manière que ledit premier faisceau (22) fourni par ladite source (10,14) arrive sur ledit premier réseau avec une incidence sensiblement normale, ce premier réseau ayant une première période spatiale $\Lambda$ supérieure à ladite longueur d'onde $\lambda$ et servant à diffracter ledit faisceau de lumière incident selon le premier ordre de diffraction de manière à former un deuxième faisceau diffracté (32) d'ordre +1 et un troisième faisceau diffracté (30) d'ordre -1,

   - au moins un premier capteur (16) permettant de mesurer une intensité lumineuse incidente, ledit dispositif étant caractérisé en ce que la distance (E) séparant ledit premier réseau dudit deuxième réseau

   est inférieure à la distance Mx de séparation spatiale desdits deuxième et troisième faisceaux, en ce que ledit deuxième réseau a une deuxième période spatiale (P) dont la valeur est sensiblement égale à la moitié de la valeur de ladite première période spatiale ($\Lambda$), ledit deuxième réseau (8) étant agencé pour diffracter en transmission ledit deuxième faisceau (32) de manière à former au moins partiellement un quatrième faisceau (40) d'ordre -1 et un cinquième faisceau (42) d'ordre 0, ce deuxième réseau étant également agencé pour diffracter en transmission ledit troisième faisceau (30) de manière à former au moins partiellement un sixième faisceau (38) d'ordre +1 et un septième faisceau (36) d'ordre 0, et en ce que ledit premier capteur (16) est disposé de manière à capter au moins partiellement l'intensité des parties respectives desdits quatrième et septième faisceaux (40,36) superposées l'une à l'autre.

2. Dispositif optique selon la revendication 1, caractérisée en ce que ladite première période spatiale $\Lambda$ a une valeur inférieure à trois fois la valeur de la longueur d'onde $\lambda$.

3. Dispositif optique selon la revendication 2, caractérisé en ce que ledit premier réseau (4) est agencé de manière que l'intensité de chacun des faisceaux d'ordre 0, -2 et +2 diffractés par ce premier réseau est au moins trois fois plus faible que l'intensité de chacun desdits deuxième et troisième faisceaux (32,30).

**4.** Dispositif optique selon la revendication 2 ou 3, dans lequel le profil dudit premier réseau (4) est formé de premiers merlons (24) et de premières embrasures (26), ces premiers merlons ayant une hauteur H et une largeur W à mi-hauteur, caractérisé en ce que la valeur de $H/\lambda$ et la valeur de $W/\Lambda$ sont reliées entre elles de telle manière que le couple formé par ces deux valeurs est compris dans une première plage bidimensionnelle (64) définie par les quatre relations mathématiques suivantes :

$$H/\lambda = 1,25 \ (W/\Lambda) + 0,45,$$

$$H/\lambda = 1,25 \ (W/\Lambda) + 0,05,$$

$$W/\Lambda = 0,8,$$

$$H/\lambda = -3,45 \ (W/\Lambda) + 2,40.$$

**5.** Dispositif optique selon la revendication 4, caractérisé en ce que ladite hauteur H est sensiblement égale à $\lambda/2(N-1)$ ou $\lambda$ est ladite longueur d'onde et N est l'indice de réfraction de la matière formant lesdits premiers merlons (24).

**6.** Dispositif optique selon l'une des revendications 2 à 5, caractérisé en ce que ledit deuxième réseau (8) est agencé de manière que l'intensité totale desdits quatrième et cinquième faisceaux (40,42) est supérieure à 80 % de l'intensité dudit deuxième faisceau (32) et que la différence d'intensité entre ces quatrième et cinquième faisceaux est supérieure à 20 % de l'intensité du cinquième faisceau (42), ledit deuxième réseau étant également agencé de manière que l'intensité totale desdits sixième et septième faisceaux (38,36) est supérieure à 80 % de l'intensité dudit troisième faisceau (30) et que la différence d'intensité entre ces sixième et septième faisceaux est inférieure à 20 % de l'intensité du septième faisceau (36).

**7.** Dispositif optique selon la revendication 6, dans lequel le profil dudit deuxième réseau (8) est formé de deuxièmes merlons (34) et de deuxièmes embrasures (36), les deuxièmes merlons ayant une hauteur Y et une largeur X à mi-hauteur, caractérisé en ce que la valeur de $Y/\lambda$ et la valeur de $X/\lambda$ sont reliées entre elles de telle manière que le couple formé par ces deux valeurs est compris dans une deuxième plage bidimensionnelle définie par les six relations mathématiques suivantes :

$$Y/\lambda = 8,679 \ (X/\lambda)^2 - 6,851 \ (X/\lambda) + 2,113;$$

$$Y/\lambda = 0,974 \ (X/\lambda) + 0,514;$$

$$Y/\lambda = 8,120 \ (X/\lambda)^2 - 6,381 \ (X/\lambda) + 1,905;$$

$$X/\lambda = 1,039 \ (X/\lambda) + 0,383;$$

$$X/\lambda = 0,40;$$

$$Y/\lambda = 1,30.$$

**8.** Dispositif optique selon l'une des revendications précédentes, caractérisé en ce que la distance (S) séparant ledit premier réseau (4) dudit premier capteur (16) est supérieure à ladite distance (Mx) de séparation spatiale desdits deuxième et troisième faisceaux (32,30).

**9.** Dispositif optique selon l'une des revendications précédentes, caractérisé en ce que la lumière provenant de ladite source (10,14) et entrant dans ledit premier capteur (16) est polarisée de telle manière que le vecteur du champ électrique de cette lumière est parallèle au premier réseau (4) et au deuxième réseau (8).

**10.** Dispositif optique selon l'une des revendications précédentes, caractérisé en ce qu'il comprend en outre un troisième réseau (60) ayant sensiblement une même période spatiale (P) que ledit deuxième réseau (8) et étant sensiblement situé à la même distance (E) dudit premier réseau (4) que ce deuxième réseau, lesdits deuxième et troisième réseaux (8, 60) étant décalés spatialement l'un relativement à l'autre d'un quart de ladite deuxième période spatiale (P), ledit dispositif optique étant agencé de manière que les dimensions du premier faisceau (22) sont suffisantes pour que chacun desdits deuxième et troisième faisceaux (32,30) soit partiellement diffracté par ledit deuxième réseau (8) et par ledit troisième réseau (60), ledit dispositif optique comprenant en outre un deuxième capteur situé sensiblement à une même distance (S) dudit premier réseau que ledit premier capteur (16) et disposé de manière à capter au moins partiellement l'intensité des parties respectives des quatrième et septième faisceaux (40, 36) superposées l'une à l'autre et diffractées par ledit troisième réseau (60), ledit premier capteur (16) étant disposé de manière à capter au moins partiellement l'intensité desdites parties respectives de ces quatrième et septième faisceaux superposées l'une à l'autre et diffractées par ledit deuxième réseau.

**11.** Dispositif optique selon la revendication 10, caractérisé en ce qu'il comprend en outre un troisième capteur (18) et un quatrième capteur disposés sensiblement à une même distance (S) dudit premier réseau (4) que lesdits premier et deuxième capteurs (16), ledit troisième capteur (18) étant disposé de manière à capter au moins partiellement l'intensité des parties respectives des cinquième et sixième faisceaux (42, 38) superposées l'une à l'autre et diffractées par ledit deuxième réseau (8), ledit quatrième capteur étant également disposé de manière à capter au moins partiellement l'intensité des parties respectives des cinquième et sixième faisceaux (42,38) superposées l'une à l'autre et diffractées par ledit troisième réseau (60).

# Fig.1

# Fig.2

## Fig.3

## Fig.4

## Fig.5

## Fig.6

# Fig.7